# EUROPEAN PATENT SPECIFICATION

(11) **EP 1 914 090 B1**
(45) Date of publication and mention of the grant of the patent: **23.09.2009**
(21) Application number: 06021962.3
(22) Date of filing: 19.10.2006
(51) Int. Cl.: B60B 33/02

(54) **Wheel assembly**
Radanordnung
Ensemble de roues

(43) Date of publication of application: 23.04.2008
(73) Proprietor: Haion Caster Industrial Co., Ltd., Taipei County 241 (TW)
(72) Inventor: Chou, Chuan-Hai, Sanchong City Taipei County 241 (TW)
(74) Representative: Becker Kurig Straus

(56) References cited:
- DE-A1- 2 937 540
- DE-A1- 3 900 889
- DE-A1-102004 035 220

## Description

### BACKGROUND OF THE INVENTION

### (a) Field of the Invention

The present invention relates to a wheel assembly, and particularly to a wheel assembly which prevents from deformation and stops effectively.

### (b) Description of the Prior Art

A conventional truckle wheel assembly substantially comprises a base and wheels pivoting to the base. An arresting member is disposed between the base and the wheels. The arresting member is a metal plate attached to the wheel. A shaft is provided on an end of the base for assembling the wheels to a bottom of an object. The wheels rotate to move the object, and at the same time, cooperate with the shaft to bring the base to rotate the wheels in multi-directions. As the object arrives at a predetermined position, the arresting member presses the wheels to stop.

However, the truckle wheel assembly is normally made of material like plastic, rubber etc.. The wheels are pressed by the arresting member repeatedly, and evenly, are pushed/pulled forcedly with constraint of the arresting member from time to time. Consequently, the wheels are easy to scrape or deform, resulting in failure to rotate and thus being useless.
In this regard, the closest prior art document DE 10 2004 035220 discloses a caster comprising a trailing wheel, a fork and an assembly journal. The fork can be swiveled in relation to the assembly journal and inside the fork a braking device is disposed which can be displaced into the braking position via a tappet actuated by a trip cam. The aim of the invention is to provide a direction-lockable caster that has a simple design. For this purpose, the tappet interacts with a direction locking part mounted stationarily on the fork, when spring biased into a direction locking position.

### SUMMARY OF THE INVENTION

To obviate the above drawback, accordingly, an object of the present invention is to provide a wheel assembly according to the appending claims, particularly claim 1, which prevents from deformation and is trigged up effectively and which has prolonged lives.

To achieve the above object, the wheel assembly of the present invention comprises a swiveling shaft, a support member movably assembled with the swiveling shaft, an arresting member and wheels. The swiveling shaft includes a swiveling sleeve, a pressing element disposed on the swiveling sleeve, and a first gear bracket and a second gear bracket located on an end of the pressing element. The support member includes a rack with an opening, and a third gear bracket snapped in the opening. protuberances extend inwardly from opposing side walls of the opening. The arresting member is mounted on the rack, and has an end thereof corresponding to the pressing element and the third gear bracket. A first resilient element is provided between the arresting member and the rack. A second resilient element is provided between the arresting member and the third gear bracket. The wheels respectively pivot to the rack and are limited at opposite sides of the arresting member. Each wheel defines an annular groove in a surface thereof for corresponding to the arresting member.

### BRIEF DESCRIPTION OF THE DRAWINGS

Fig. 1 is a perspective view of a wheel assembly according to the present invention.
Fig. 2 is an exploded view of the wheel assembly of Fig. 1.
Fig. 3 is a cross-sectional view of the wheel assembly as rotating.
Fig. 4 is a cross-sectional view of the wheel assembly as limiting rotation direction.
Fig. 5 is a cross-sectional view of the wheel assembly as limiting rotation direction and movement.

### DETAILED DESCRIPTION OF THE PREFERRED EMBODIMENTS

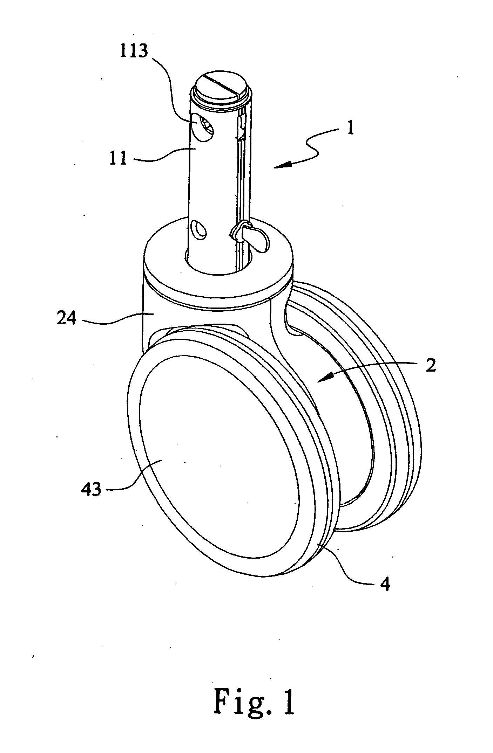

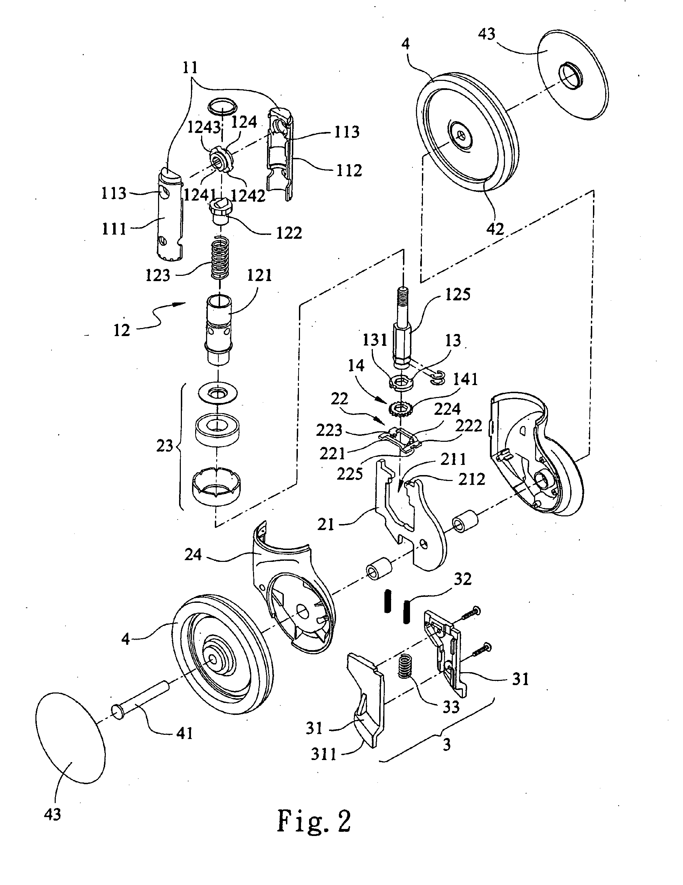

With reference to Figs. 1, 2 and 3, a wheel assembly in accordance with the present invention comprises a swiveling shaft 1, a support member 2, an arresting member 3 and wheels 4. The swiveling shaft 1 at least comprises a swiveling sleeve 11, a pressing element 12 disposed on the swiveling sleeve 11, and a first gear bracket 13 and a second gear bracket 14 located on an end of the pressing element 12. The swiveling sleeve 11 has a first casing 111 and a second casing 112. Through holes 113 are respectively defined in the first casing 111 and the second casing 112 and correspond to each other for allowing a rotating level (not shown) to extend therethrough and actuate the pressing element 12. The pressing element 12 comprises an axle sleeve 121, a pushing portion 122 partly extending into the axle sleeve 121, a resilient portion 123, a rotating portion 124 and an axle pole 125. The rotating portion 124 abuts an end of the pushing portion 122 and corresponds to the through holes 113. The axle pole 125 is disposed in the swiveling sleeve 11 and abuts another end of the pushing portion 122. The resilient portion 123 is provided between the pushing portion 122 and the axle pole 125. A first recess 1241, a second recess 1242 and a projection 1243 are respectively formed at an outward rim of the rotating portion 124 for cooperating with the pushing portion 122. The first gear bracket 13 and the second gear bracket 14 are arranged at an end of the axle pole 125. Slits 131 are defined in an outward rim of the first gear bracket 13 and correspond to each other. Indented portions 141 are distributed on an outward rim of the second gear bracket 14.

The support member 2 is movably assembled with the swiveling shaft 1, and at least comprises a rack 21 with an opening 211, and a third gear bracket 22 snapped in the opening 211. A bearing 23 is provided at an end of the rack 21 for movably connecting with the axel sleeve 121 of the swiveling shaft 1. Protuberances 212 extend inwardly from opposing side walls of the opening 211. The third gear bracket 22 includes a transverse plate 221 and extension plates 222 respectively on opposite sides of the transverse plate 221. A slot 223 is defined in the transverse plate 221, and tooth-like portions 224 are formed on inner rims of the transverse plate 221. Locking cutouts 225 are respectively defined in the extension plates 222 for locking with the sides walls of the opening 211. The extension plates 222 are slightly higher than the transverse plate 221, defining an offset between the extension plates 222 and the transverse plate 221. A cover 24 is provided outside the support member 2 for covering components inside the support member 2.

The arresting member 3 is mounted on the rack 21, and at least comprises a pair of arresting blocks 31. Each arresting block 31 forms an arcuate interferential portion 311 on an end thereof. A first resilient element 33 is provided between the arresting member 3 and the rack 21. An end of the arresting member 3 corresponds to the axle pole 125 of the pressing element 12 and the third gear bracket 22. A second resilient element 32 is provided between the arresting member 3 and the third gear bracket 22.

The wheels 4 has central shafts 41 respectively for pivoting the wheels 4 on the rack 21 and limiting the wheels 4 respectively at opposite sides of the arresting member 3. Each wheel 4 defines an annular groove 42 in a surface thereof respectively for corresponding to the arcuate interferential portion 311 of the arresting block 31.

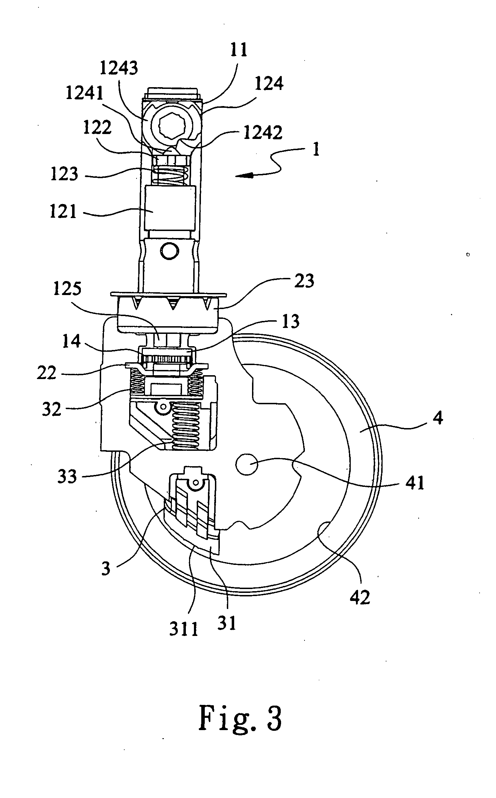

Referring to Fig. 3, in use, the swiveling shaft 1 is mounted on a bottom of an object (not shown). The first recess 1241 of the rotating portion 124 engages with the pushing portion 122. The resilient portion 123 between the pushing portion 122 and the axle pole 125 is slightly compressed. The first gear bracket 13 and the second gear bracket 14 of the pressing element 12 keep away from the protuberances 212 and the third gear bracket 22. The axle pole 125 of the pressing element 12 is apart from the arresting member 3. Therefore, the swiveling shaft 1, the support member 2 and the wheels 4 are all free, allowing the wheels 4 to rotate and swivel freely, namely the wheels 4 are allowed to rotate and move in multi-direction.

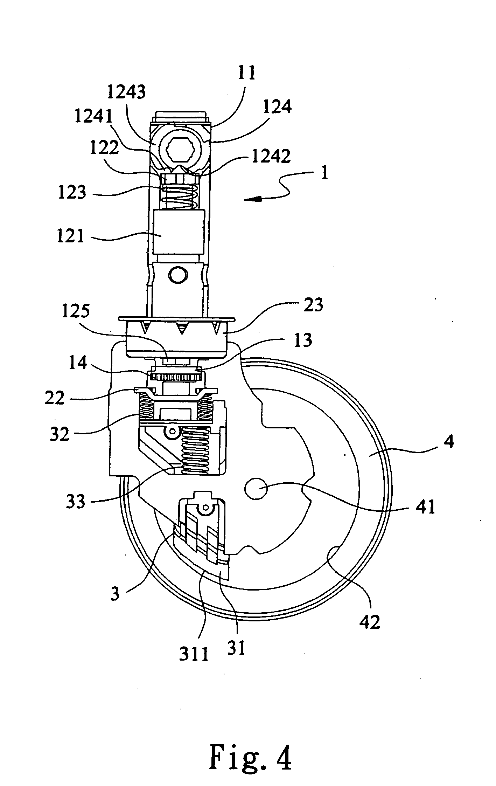

Referring to Fig. 4, in order to limit rotation of the support member 2, the rotating level (not shown) is extended into the rotating portion 124, and rotates (clockwise or counterclockwise depending on practical state). The second recess 1242 of the rotating portion 124 abuts against the pushing portion 122. The resilient portion 123 between the pushing portion 122 and the axle pole 125 is released, driving the axle pole 125 to move. The first gear bracket 13 at an end of the axle pole 125 moves upwardly. The slits 131 of the first gear bracket 13 anchor the protuberances 212 of the rack 21. Thus, the first gear bracket 13 limits rotation of the rack 21, correspondingly, limiting rotation of wheels 4.

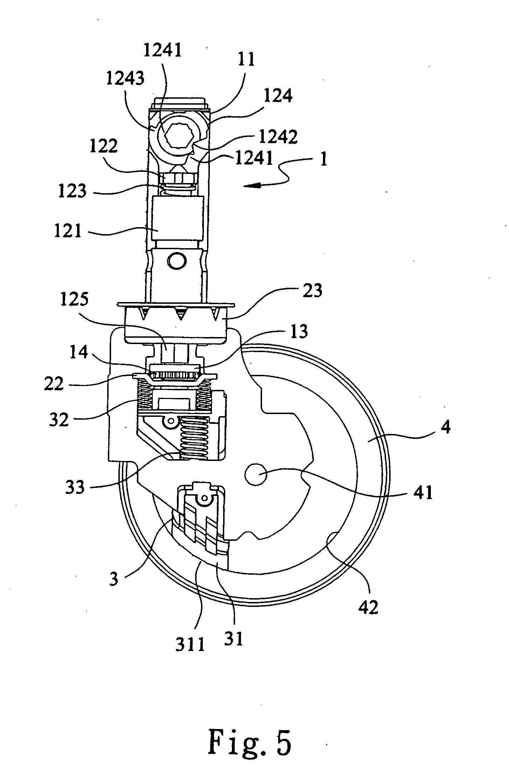

Referring to Fig. 5, in order to limit rotation of the support member 2 and the wheels 4 simultaneously, the rotating level is extended into the rotating portion 124 and rotates (clockwise or counterclockwise depending on practical state). The projection 1243 of the rotating portion 124 abuts against the pushing portion 122. The resilient portion 123 between the pushing portion 122 and the axle pole 125 is generally compressed. The pushing portion 122 pushes the axle pole 125, urging the second gear bracket 14 at an end of the axle pole 125 to move downwardly. The indented portions 141 of the second gear bracket 14 mesh the tooth-like portions 224 of the third gear bracket 22. The second resilient element 32 between the arresting member 3 and the third gear bracket 22 is compressed. The second gear bracket 14 restrains rotation of the rack 21, thereby limiting rotation of wheels 4. Meantime the axle pole 125 moves downwardly, pushing the arresting member 3 to move downwardly. The first resilient element 33 between the arresting member 3 and the rack 21 is compressed. The arcuate interferential portions 311 of the arresting member 3 press against the annular grooves 42 of the wheels 4. Thus, the arresting member 3 limits rotation direction and rotation of the wheels 4 simultaneously.

The rotating level is extended into the rotating portion 124 and rotates in a reverse direction so as to set the wheels 4 free. The first recess 1241 of the rotating portion 124 abuts against the pushing portion 122. The resilient portion 123 between the pushing portion 122 and the axle pole 125 is slightly compressed, while the first resilient element 33 and the second resilient element 32 are free. In this state, the wheels 4 swivel and rotate freely.

## Claims

1. A wheel assembly comprising:
a swiveling shaft (1) at least including a swiveling sleeve (11), a pressing element (12) disposed on the swiveling sleeve (11), and a first gear bracket (13)and a second gear bracket (14) located on an end of the pressing element (12);
a support member (2) movably assembled with the swiveling shaft (1), and
at least including a rack (21) with an opening (211), and a third gear bracket (22) snapped in the opening (211), protuberances (212) extending inwardly from opposing side walls of the opening (211);
an arresting member (3) mounted on the rack, wherein the wheel assembly is **characterized in** further comprising:
a first resilient element (33) being provided between the arresting member (3) and the rack, an end of the arresting member (3) corresponding to the pressing element (12) and
the third gear bracket (22), a second resilient element (32) being provided between the arresting member (3) and the third gear bracket (22); and
wheels respectively pivoting to the rack (21) and being limited at opposite sides of the arresting member (3), each wheel defining an annular groove (42) in a surface thereof for corresponding to the arresting member (3).

2. The wheel assembly as claimed in claim 1, wherein the swiveling sleeve (11) has a first casing (111) and a second casing (112), through holes being formed respectively defined in the first casing (111) and the second casing (112) and correspond to each other for allowing a rotating level to extend therethrough and actuate the pressing element (12).

3. The wheel assembly as claimed in claim 1, wherein the pressing element (12) comprises an axle sleeve (121), a pushing portion (122) partly extending into the axle sleeve (121), a rotating portion (124)abutting an end of the pushing portion (122), an axle pole disposed in the swiveling sleeve (11) and abutting another end of the pushing portion (122), and a resilient portion between the pushing portion (122) and the axle pole.

4. The wheel assembly as claimed in claim 3, wherein a first recess, a second recess and a projection are respectively formed at an outward rim of the rotating portion (124)for cooperating with the pushing portion (122).

5. The wheel assembly as claimed in claim 3, wherein slits are defined in an outward rim of the first gear bracket (13).

6. The wheel assembly as claimed in claim 3, wherein indented portions are distributed on an outward rim of the second gear bracket (14).

7. The wheel assembly as claimed in claim 1, wherein a bearing is provided at an end of the rack (21) for movably connecting with the swiveling shaft (1).

8. The wheel assembly as claimed in claim 1, wherein the third gear bracket (22) includes a transverse plate and extension plates respectively on opposite sides of the transverse plate, a slot being defined in the transverse plate, tooth-like portions being formed on inner rims of the transverse plate, locking cutouts being respectively defined in the extension plates for locking with the sides walls of the opening (211).

9. The wheel assembly as claimed in claim 8, wherein the extension plates are slightly higher than the transverse plate, defining an offset between the extension plates and the transverse plate.

10. The wheel assembly as claimed in claim 1, wherein the arresting member (3) at least comprises a pair of arresting blocks, each arresting block forming an arcuate interferential portion on an end thereof for corresponding to the annular groove (42)s of the wheels.

11. The wheel assembly as claimed in claim 1, wherein central shafts are provided on the wheels respectively for pivoting the wheels to the rack.

## Patentansprüche

1. Rad-Anordnung, umfassend:
eine Schwenkachse (1), die mindestens umfasst: eine Schwenkhülse (11), ein Druckelement (12), das an der Schwenkhülse (11) angeordnet ist, und eine erste Zahnscheibe (13) und eine zweite Zahnscheibe (14), platziert an einem Ende des Druckelements (12);
ein Trägerelement (2), das beweglich an die Schwenkachse (1) montiert ist, und
mindestens umfasst: ein Gestell (21), mit einer Öffnung (211), und einer dritten Zahnscheibe (22), das in der Öffnung (211) eingerastet ist, Vorsprünge (212), die sich von gegenüberliegenden Seitenwänden der Öffnung (211) nach Innen erstrecken;
ein Arretier-Element (3), das an dem Gestell montiert ist, wobei die Rad-Anordnung **dadurch gekennzeichnet ist, dass** sie weiter umfasst:
ein erstes elastisches Element (33), das zwischen dem Arretier-Element (3) und dem Gestell bereitgestellt ist, wobei ein Ende des Arretier-Elements (3) zum Druckelement (12) passt, und
die dritte Zahnscheibe (22), wobei ein zweites elastisches Element (32) zwischen dem Arretier-Element (3) und der dritten Zahnscheibe (22) bereitgestellt ist; und
wobei Räder sich jeweils gegen das Gestell (21) drehen und an gegenüberliegenden Seiten des Arretier-Elements (3) begrenzt sind, wobei jedes Rad eine ringförmige Vertiefung (42) in einer Oberfläche davon definiert, um zum Arretier-Element (3) zu passen.

2. Rad-Anordnung gemäß Anspruch 1, wobei die Schwenkhülse (11) aufweist: ein erstes Gehäuse (111) und ein zweites Gehäuse (112), Durchgangslöcher, die jeweils in dem ersten Gehäuse (111) und dem zweiten Gehäuse (112) definiert sind und einander entsprechen, um es einem Drehhebel zu ermöglichen, sich dort hindurch zu erstrecken und das Druckelement (12) zu betätigen.

3. Rad-Anordnung gemäß Anspruch 1, wobei das Druckelement (12) umfasst: eine Achshülse (121), einen Drückabschnitt (122), der sich zum Teil in die Achshülse (121) erstreckt, einen Drehabschnitt (124), der an ein Ende des Drückabschnitts (122) grenzt, einen Achsschaft, der in der Schwenkhülse (11) platziert ist und an ein anderes Ende des Drückabschnitts (122) grenzt, und einen elastischen Abschnitt zwischen dem Drückabschnitt (122) und dem Achsschaft.

4. Rad-Anordnung gemäß Anspruch 3, wobei eine erste Vertiefung, eine zweite Vertiefung und ein Vorsprung entsprechend an einem Außenrand des Drehabschnitts (124) gebildet sind, um mit dem Drückabschnitt (122) zusammenzuarbeiten.

5. Rad-Anordnung gemäß Anspruch 3, wobei Schlitze in einem Außenrand der ersten Zahnscheibe (13) definiert sind.

6. Rad-Anordnung gemäß Anspruch 3, wobei eingerückte Abschnitte auf einem Außenrand der zweiten Zahnscheibe (14) verteilt sind.

7. Rad-Anordnung gemäß Anspruch 1, wobei ein Lager an einem Ende des Gestells (21) bereitgestellt ist, um es beweglich mit der Schwenkachse (1) zu verbinden.

8. Rad-Anordnung gemäß Anspruch 1, wobei die dritte Zahnscheibe (22) umfasst:
eine Querplatte und Erweiterungsplatten an jeweils gegenüberliegenden Seiten der Querplatte, einen Schlitz, der in der Querplatte definiert ist, zahnartige Abschnitte, die auf Innenrändern der Querplatte gebildet sind, Sperrausnehmungen, die jeweils zum Sperren mit den Seitenwänden der Öffnung (211) in den Erweiterungsplatten definiert sind.

9. Rad-Anordnung gemäß Anspruch 8, wobei die Erweiterungsplatten geringfügig höher sind als die Querplatte und einen Absatz zwischen den Erweiterungsplatten und der Querplatte definieren.

10. Rad-Anordnung gemäß Anspruch 1, wobei das Arretier-Element (3) mindestens umfasst: ein Paar Arretier-Blöcke, wobei jeder Arretier-Block einen gebogenen Eingreifabschnitt an einem Ende davon bildet, um der ringförmigen Vertiefung (42) der Räder zu entsprechen.

11. Rad-Anordnung gemäß Anspruch 1, wobei Zentralachsen jeweils an den Rädern bereitgestellt sind, um die Räder in Bezug auf das Gestell zu drehen.

## Revendications

1. Ensemble de roues, comprenant :
un arbre de pivot (1) incluant au moins un manchon de pivot (11), un élément de pression (12) disposé sur le manchon de pivot (11), et un premier support de pignon (13) et un deuxième support de pignon (14) situés sur une extrémité de l'élément de pression (12) ;
un élément de support (2) assemblé de manière amovible avec l'arbre de pivot (1), et incluant au moins une crémaillère (21) dotée d'une ouverture (211), et un troisième support de pignon (22) encliqueté dans l'ouverture (211), des protubérances (212) s'étendant vers l'intérieur à partir de parois latérales opposées de l'ouverture (211) ;
un élément d'arrêt (3) monté sur la crémaillère, dans lequel l'ensemble de roues est **caractérisé en ce qu'**il comprend en outre :
un premier élément élastique (33) disposé entre l'élément d'arrêt (3) et la crémaillère, une extrémité de l'élément d'arrêt (3) correspondant avec l'élément de pression (12) et avec le troisième support de pignon (22), un second élément élastique (32) étant disposé entre l'élément d'arrêt (3) et le troisième support de pignon (22) ; et
des roues pivotant respectivement par rapport à la crémaillère (21) et étant limitées au niveau de côtés opposés de l'élément d'arrêt (3), chaque roue définissant une rainure annulaire (42) dans sa surface à des fins de correspondre avec l'élément d'arrêt (3).

2. Ensemble de roues selon la revendication 1, dans lequel le manchon de pivot (11) comporte un premier boîtier (111) et un second boîtier (112), des trous traversants étant formés en étant définis respectivement dans le premier boîtier (111) et dans le second boîtier (112) et correspondant l'un avec l'autre pour permettre un degré de rotation à travers ceux-ci et l'actionnement de l'élément de pression (12).

3. Ensemble de roues selon la revendication 1, dans lequel l'élément de pression (12) comprend un manchon d'axe (121), une partie de poussée (122) s'étendant partiellement dans le manchon d'axe (121), une partie tournante (124) venant en butée contre une extrémité de la partie de poussée (122), une tige d'axe disposée dans le manchon de pivot (11) et venant en butée contre une autre extrémité de la partie de poussée (122), et une partie élastique située entre la partie de poussée (122) et la tige d'axe.

4. Ensemble de roues selon la revendication 3, dans lequel un premier évidement, un second évidement et une saillie sont formés respectivement au niveau d'un rebord extérieur de la partie tournante (124) à des fins de coopération avec la partie de poussée (122).

5. Ensemble de roues selon la revendication 3, dans lequel des fentes sont définies dans un rebord extérieur du premier support de pignon (13).

6. Ensemble de roues selon la revendication 3, dans lequel des parties crénelées sont réparties sur un rebord extérieur du second support de pignon (14).

7. Ensemble de roues selon la revendication 1, dans lequel un palier est réalisé au niveau d'une extrémité de la crémaillère (21) à des fins de liaison amovible avec l'arbre de pivot (1).

8. Ensemble de roues selon la revendication 1, dans lequel le troisième support de pignon (22) inclut une plaque transversale et des plaques de prolongement situées respectivement sur des côtés opposés de la plaque transversale, une fente étant définie dans la plaque transversale, des parties de type dent étant formées sur des rebords intérieurs de la plaque transversale, des découpes de verrouillage étant définies respectivement dans les plaques de prolongement à des fins de verrouillage avec les parois latérales de l'ouverture (211).

9. Ensemble de roues selon la revendication 8, dans lequel les plaques de prolongement sont légèrement plus hautes que la plaque transversale, en définissant un décalage entre les plaques de prolongement et la plaque transversale.

10. Ensemble de roues selon la revendication 1, dans lequel l'élément d'arrêt (3) comprend au moins une paire de blocs d'arrêt, chaque bloc d'arrêt formant une partie d'intervention arquée sur son extrémité à des fins de correspondance avec la rainure annulaire (42) des roues.

11. Ensemble de roues selon la revendication 1, dans lequel des arbres centraux sont disposés respectivement sur les roues pour permettre un pivotement des roues par rapport à la crémaillère.
